# EUROPÄISCHE PATENTSCHRIFT

(11) **EP 4 622 864 B1**
(45) Veröffentlichungstag und Bekanntmachung des Hinweises auf die Patenterteilung: **08.04.2026**
(21) Anmeldenummer: 23817649.9
(22) Anmeldetag: 24.11.2023
(51) Int. Cl.: B64D 11/00

(54) **ÜBERKOPF-KABINENAUSSTATTUNG FÜR EIN FLUGZEUG**
OVERHEAD CABIN FITTING FOR AN AIRCRAFT
INSTALLATION SUPÉRIEURE DE CABINE POUR AÉRONEF

(30) Priorität: 25.11.2022 AT 508982022
(43) Veröffentlichungstag der Anmeldung: 01.10.2025
(73) Patentinhaber: FACC AG, 4910 Ried im Innkreis (AT)
(72) Erfinder: KAMMERER, Bernhard, 4755 Zell an der Pram (AT)
(74) Vertreter: SONN Patentanwälte GmbH & Co KG
(86) Internationale Anmeldenummer: PCT/AT2023/060412
(87) Internationale Veröffentlichungsnummer: WO 2024/108249

(56) Entgegenhaltungen:
- EP-A2- 1 829 745
- DE-A1- 102007 019 538
- DE-A1- 102019 008 403
- US-A- 5 921 670
- US-A1- 2011 253 836
- US-A1- 2011 256 821
- US-A1- 2012 074 258

## Beschreibung

Die Erfindung betrifft eine Überkopf-Kabinenausstattung für ein Flugzeug, aufweisend:
ein Überkopf-Gepäckfach für ein Gepäckstück,
eine Belüftungseinrichtung mit einem Gehäuse, einem Lufteinlass, einem Luftführungskanal und einem Luftauslass,
eine Beleuchtungseinrichtung mit Beleuchtungselementen, wobei die Belüftungseinrichtung und die Beleuchtungseinrichtung jeweils oberhalb des Überkopf-Gepäckfachs angeordnet sind.

Weiters betrifft die Erfindung ein Flugzeug mit zumindest einer Überkopf-Kabinenausstattung.

Aus der DE 10 2019 008 403 A1 ist ein solches Überkopf-Staufach bekannt, welches im Passagierbereich einer Flugzeugkabine oberhalb eines Sitzbereichs installiert wird. Das Staufach weist ein Staufachgehäuse und eine Klappe zum Verschließen des Staufachgehäuses auf. Weiters ist ein Lüftungssystem vorgesehen, welches zur Versorgung und Verteilung von Frischluft in dem Passagierbereich der Kabine dient. Das Lüftungssystem weist Luftauslässe auf, welche mit Luftkanälen verbunden sind. Die Luftauslässe sind oberhalb des Staufaches angeordnet. Schließlich ist eine Beleuchtungseinrichtung zur Beleuchtung der Kabine, insbesondere des Gangbereichs, oberhalb des Staufaches befestigt. Die Beleuchtungseinrichtung kann als OLED-Streifen ausgebildet sein, welcher in der dargestellten Ausführung in einem Abstand zum Luftauslass in Richtung des Gangbereichs befestigt ist. Das Staufachmodul weist einen lichtdurchlässigen Beleuchtungsabschnitt auf, welcher dazu dient, einen Lichteinfall im geöffneten Zustand des Staufachs durch die Beleuchtungseinrichtung zu gewährleisten. Weiters wird in dieser Patentanmeldung allgemein erwähnt, dass die Beleuchtungseinrichtung einen Teil des Luftauslasses bilden und/oder einen Luftströmungsweg definieren kann. Allerdings wird keine in die Praxis umsetzbare Ausführung offenbart, mit welcher eine solche Integration bewerkstelligt werden könnte. Wenn die Luftauslässe und die Beleuchtungsmittel hingegen übereinander montiert werden sollen, ergibt sich das Problem, dass der Einbauraum über dem Überkopf-Staufach begrenzt ist. Daraus können sich Funktionseinbußen und hoher Einbau- und Wartungsaufwand ergeben. Ein weiteres Problem ist die Wärmeentwicklung solcher Beleuchtungseinrichtungen.

DE 10 2007 019 538 A1 offenbart ein Luftführungselement für eine Flugzeugklimaanlage. Das Luftführungselement weist eine Lochblende mit einer Mehrzahl von Stegen auf, um eine Begradigung einer Luftströmung zu erwirken.

US 7,527,402 B2 zeigt eine andersartige Leselicht- und "Personal Air Outlet"-Einheit, welche jedoch grundlegend verschieden von Beleuchtungs- und Belüftungseinrichtungen oberhalb von Überkopf-Gepäckfächern ist.

Der allgemeine Stand der Technik wird weiters durch US 2020148367 A1, EP 2484588 A1, US 2011256821 A1 und US 2012074258 A1 illustriert.

Es ist die Aufgabe der Erfindung zumindest einzelne Nachteile des Standes der Technik zu lindern bzw. zu beheben. Ziel der vorliegenden Erfindung ist es insbesondere, eine Überkopf-Kabinenausstattung bereitzustellen, mit welcher die Beleuchtungs- und die Belüftungseinrichtung platzsparend oberhalb des Überkopf-Gepäckfaches angeordnet werden kann. Weiters soll bevorzugt das Wärmemanagement verbessert und der Montageaufwand reduziert werden.

Gelöst wird die Aufgabe durch eine Überkopf-Kabinenausstattung mit den Merkmalen von Anspruch 1. Bevorzugte Ausführungsbeispiele sind in den abhängigen Ansprüchen angegeben.

Erfindungsgemäß weist die Überkopf-Kabinenausstattung am Luftauslass der Belüftungseinrichtung einen Träger auf, an welchem Beleuchtungselemente angeordnet sind.

Somit ist der Träger mit den Beleuchtungselementen am Luftauslass angeordnet, so dass die vom Lufteinlass über den Luftführungskanal zum Luftauslass strömende Luft vorbei an den Beleuchtungselementen in die Flugzeugkabine abgegeben werden kann. Da der Träger in vertikaler Richtung überlappend mit dem Luftauslass, insbesondere im Wesentlichen auf derselben Höhe wie der Luftauslass, angeordnet ist, kann eine besonders flache Ausführung der Beleuchtungs- und Belüftungseinrichtung geschaffen werden, mit welcher der beengte Einbauraum oberhalb des Überkopf-Gepäckfaches optimal ausgenützt werden kann. Die Anordnung der Beleuchtungselemente auf Höhe des Luftauslasses bringt weiters den Effekt mit sich, dass die von den Beleuchtungselementen abgegebene Wärme durch den Luftstrom wirksam aufgenommen werden kann. Aufgrund der verbesserten Wärmeabfuhr über den Luftstrom kann eine material- und gewichtssparende Ausführung vorgesehen werden. Bevorzugt ist der Träger am Gehäuse der Belüftungseinrichtung befestigt. Dadurch wird die Beleuchtungseinrichtung auf günstige Weise in die Belüftungseinrichtung integriert. Vorteilhafterweise kann so der Montage- und Wartungsaufwand reduziert werden. Besonders günstig ist es, wenn der Träger zwischen zwei den Luftführungskanal begrenzenden Gehäusewänden, insbesondere einer oberen und einer unteren Gehäusewand, montiert ist.

Für die Zwecke dieser Offenbarung beziehen sich die Orts- und Richtungsangaben, wie "horizontal", "vertikal", "oben", "unten", auf den bestimmungsgemäßen Montagezustand des Gepäckfaches in einer Flugzeugkabine bei horizontal ausgerichtetem Flugzeug. "Vorne" bezieht sich auf die dem Benutzer zugewandte Seite des Überkopf-Gepäckfaches, welches bevorzugt in Flugzeug-Längsrichtung seitlich neben einem Gang angeordnet ist.

Bei einer bevorzugten Ausführung der Überkopf-Kabinenausstattung lässt der Träger eine Mehrzahl, vorzugsweise eine Vielzahl, von Luftauslassöffnungen des Luftauslasses frei, wobei insbesondere mehr als 10, beispielsweise mehr als 20 Luftauslassöffnungen, vorgesehen sind. Somit kann die Luft im Wesentlichen ungehindert durch die Luftauslassöffnungen aus dem Luftauslass austreten. Vorteilhafterweise kann ein Rückstau von Luft vermieden werden. Die Luft passiert die Luftauslassöffnungen des Trägers, welcher am Luftauslass angeordnet, insbesondere in dem Luftauslass eingebaut, ist. Die Beleuchtungselemente am Träger werden beim Durchströmen der Luftauslassöffnungen gekühlt.

Als Beleuchtungselemente sind bevorzugt LEDs (Light Emitting Diodes), besonders bevorzugt WRGB-LEDs (White, Red, Green, Blue - Light Emitting Diodes), vorgesehen. Ein großer Vorteil von LEDs ist eine geringere Wärmeentwicklung gegenüber anderen Leuchtmitteln. Weiters sind LEDs energieeffizienter als andere Leuchtmittel. Durch die Wärmeabfuhr mittels des Luftstroms aus dem Luftauslass können Lebensdauer und Betriebssicherheit der Beleuchtungseinrichtung erhöht werden.

Aufgrund der Wärmeabfuhr über die Luftströmung am Luftauslass muss der Träger nicht aus einem massiven Material wie Aluminium gefertigt sein. Bei einer bevorzugten Ausführungsform kann der Träger daher ein Leichtbaumaterial, insbesondere glasfaserverstärkten Kunststoff, aufweisen bzw. aus diesem Leichtbaumaterial gefertigt sein.

Bevorzugt ist die Vorderseite des Trägers, d.h. die vom Lufteinlass abgewandte Seite des Trägers, im Wesentlichen bündig mit einer Vorderseite des Gehäuses angeordnet, welches den Luftauslass begrenzt. Durch die bündige Anordnung kann eine optimale Raumausnutzung erzielt werden. Weiters kann die Wärmeabfuhr verbessert werden. Bevorzugt ist der Träger oberseitig mit der Innenseite einer oberen Gehäusewand und unterseitig mit der Innenseite einer unteren Gehäusewand des Gehäuses der Belüftungseinrichtung verbunden.

Bei einer bevorzugten Ausführungsform ist der Träger als Gitterstruktur, insbesondere mit Längs- und/oder Querträger- und/oder Diagonalträgerelementen, ausgebildet. Bevorzugt ist eine regelmäßige Gitterstruktur vorgesehen. Bei dieser Ausführung kann eine gleichmäßige Beleuchtung und Belüftung der Flugzeugkabine sichergestellt werden. Je nach Ausführung sind in Längsrichtung des Luftauslasses verlaufende Längsträgerelemente und/oder in vertikaler Richtung verlaufende Querträgerelemente und/oder in einem von 0° und 90° verschiedenen Winkel, beispielsweise in einem Winkel von im Wesentlichen 45°, zur Längsrichtung des Luftauslasses verlaufende Diagonalträgerelemente vorgesehen, an denen die Beleuchtungselemente angebracht sind. Bevorzugt sind mehrere Reihen von Beleuchtungselementen vorgesehen, welche in unterschiedlichen Vertikalebenen der Gitterstruktur angeordnet sind. Jede Reihe kann mehrere, insbesondere viele, beispielsweise mehr als 5, vorzugsweise mehr als 10, Beleuchtungselemente, insbesondere LEDs, aufweisen.

Die Beleuchtungselemente am Träger sind bevorzugt über Leitungen, insbesondere über Leiterbahnen, mit einer Stromversorgung verbunden. Bevorzugt erstrecken sich die Leitungen entlang von Längs- und/oder Quer- und/oder Diagonalträgerelementen der Gitterstruktur.

Bei einer bevorzugten Ausführungsform sind die Beleuchtungselemente an Kreuzungsstellen von Längs- und/oder Querträger- und/oder Diagonalträgerelementen, insbesondere an Kreuzungsstellen von Diagonalträgerelementen, angeordnet. Dadurch wird eine besonders günstige Umströmung mit Luft erreicht. Weiters kann die Luftströmung am Luftauslass vergleichmäßigt werden.

Bei einer bevorzugten Ausführung weist der Luftauslass der Überkopf-Kabinenausstattung eine um ein Mehrfaches größere Längs- als Höhenerstreckung auf, wobei der Träger, insbesondere die Gitterstruktur, in Richtung der Längserstreckung des Luftauslasses langgestreckt ist. Bei dieser Ausführung kann die Belüftungseinrichtung ein Flachgehäuse aufweisen, welches im liegenden Zustand angeordnet ist. Der Luftauslass des Flachgehäuses ist in Flugzeug-Längsrichtung langgestreckt. Die Länge des Luftauslasses (d.h. seine horizontale Erstreckung in Flugzeug-Längsrichtung) kann beispielsweise um mindestens das 5-fache, insbesondere um mindestens das 10-fache, größer als die Höhe des Luftauslasses (d.h. seine vertikale Erstreckung) sein. Dadurch kann der verfügbare Raum oberhalb des Überkopf-Gepäckfaches optimal genutzt werden. Weiters kann sich der Träger vorzugsweise im Wesentlichen über die gesamte Länge des Luftauslasses erstrecken, wodurch eine hohe Anzahl an Beleuchtungselementen am Träger angeordnet sein kann, um eine optimale Ausleuchtung insbesondere im Deckenbereich der Flugzeugkabine zu gewährleisten.

Bevorzugt erweitert sich das Gehäuse der Belüftungseinrichtung in Draufsicht vom Lufteinlass zum Luftauslass hin. Der Lufteinlass kann als Lufteinlassstutzen mit einem vorzugsweise im Wesentlichen zylindrischen Querschnitt ausgeführt sein, um einen Anschluss an ein Belüftungssystem, insbesondere an eine Flugzeugklimaanlage, zu ermöglichen. Das Belüftungssystem kann eine Flugzeugklimaanlage sein. Der Lufteinlassstutzen kann als vom Gehäuse gesondertes Bauteil ausgeführt sein, um einen leichten Austausch bzw. eine einfache Verbindung mit dem Belüftungssystem zu ermöglichen. Der Lufteinlass kann insbesondere mittig bezüglich der Längserstreckung des Luftauslasses angeordnet sein. Durch die vom Lufteinlass zum Luftauslass hin erweiterte Ausführung des Gehäuses kann gewährleistet werden, dass Luft über die Länge des Überkopf-Gepäckfaches ausströmt.

Bei einer bevorzugten Ausführungsform weist die Überkopf-Kabinenausstattung eine Einrichtung zur Vergleichmäßigung der Luftströmung entlang des Luftauslasses auf. Mit dieser Einrichtung kann erreicht werden, dass die Luftströmung im Wesentlichen gleichmäßig über den Querschnitt des Luftauslasses austritt. Mit Hilfe dieser Einrichtung kann die Luft seitlich verteilt werden. Dafür kann die Einrichtung den Strömungswiderstand so ändern, dass die Luft gleichmäßig über den Luftauslass austreten kann.

Bei einer ersten Ausführungsvariante weist die Einrichtung zur Vergleichmäßigung der Luftströmung entlang des Luftauslasses eine Vertiefung des Belüftungsgehäuses in einem mittleren Längsabschnitt gegenüber endseitigen Längsabschnitten auf, um einen gleichmäßigen Austritt von Luft aus dem Luftauslass zu ermöglichen. Somit kann sichergestellt sein, dass die Luft nicht nur im mittleren Längsabschnitt gegenüberliegend des Lufteinlasses, sondern entsprechende Luftmengen auch an den endseitigen Längsabschnitten abgegeben werden. Die Vertiefung bildet eine Querschnittsverjüngung des Strömungskanals. Die Vertiefung weist insbesondere abgerundete Kanten auf, um störende Geräusche zu vermeiden.

Bei einer bevorzugten Ausführung verbreitern sich die Vertiefungen zum Luftauslass hin. Die Vertiefung ist bevorzugt entsprechend der oberen bzw. unteren Gehäusewand des Gehäuses geformt. Somit kann die Vertiefung beispielsweise in Draufsicht im Wesentlichen dreieckig, vorzugsweise mit abgerundeten Ecken, ausgeführt sein. Auf diese Weise kann die Luft gleichmäßig über den Querschnitt des Luftauslasses verteilt werden. Durch den gleichmäßigen Luftströmungsverlauf kann die Wärme von allen Beleuchtungselementen abtransportiert werden.

Bei einer zweiten Ausführungsvariante weist die Einrichtung zur Vergleichsmäßigung der Luftströmung zumindest eine Luftführungsrippe innerhalb des Luftführungskanals auf. Mittels der Luftführungsrippe können die Luftströme effektiv geleitet bzw. umgeleitet werden. Diese Variante eignet sich insbesondere bei einer Ausführung des Gehäuses mit einer oberen und einer unteren Halbschale, welche insbesondere aus Schaumstoff gebildet sein können.

Bei einer bevorzugten Ausführungsform weist das Überkopf-Gepäckfach ein einen Aufnahmeraum für Gepäckstücke einschließendes Gepäckfachgehäuse und eine von einer Schließ- in eine Offenstellung hochschwenkbare Klappe auf, welche an dem (während der Verschwenkung der Klappe stillstehenden) Gepäckfachgehäuse befestigt ist. Bevorzugt ist die Klappe über eine Scharnieranordnung mit einem Schwenkarm an dem Gepäckfachgehäuse montiert. Der Schwenkarm hat bevorzugt eine solche Länge, dass zwischen der Oberseite eines Oberteils des Gepäckfachgehäuses und einer (bezogen auf die Schließstellung der Klappe) oberen Kante der Klappe ein Spalt ausgebildet ist. Dadurch können Licht und Luft von der Beleuchtungs- und Belüftungseinrichtung nicht nur in der Schließ-, sondern auch in der Offenstellung der Klappe in die Flugzeugkabine abgegeben werden. Der Spalt ist bevorzugt zumindest gleich hoch wie der Luftauslass.

Bei einer zweiten Ausführungsform weist das Überkopf-Gepäckfach eine Schütte zum Einlegen von Gepäckstücken auf, wobei die Schütte von einer Schließ- in eine Offenstellung relativ zu einem währenddessen feststehenden Gehäuse absenkbar ist.

Die vorliegende Erfindung wird nachstehend anhand von Ausführungsbeispielen erläutert, welche in den Zeichnungen dargestellt sind.

Fig. 1A und 1B zeigen eine erfindungsgemäße Überkopf-Kabinenausstattung mit einem Überkopf-Gepäckfach und einer integrierten Belüftungs- und Beleuchtungseinrichtung in perspektivischer Ansicht bzw. in einer Seitenansicht, wobei eine Klappe des Überkopf-Gepäckfachs in einer Schließstellung dargestellt ist.

Fig. 1C zeigt die Überkopf-Kabinenausstattung gemäß Fig. 1A und Fig. 1B in einer Offenstellung der Klappe.

Fig. 2 zeigt eine Detailansicht der Belüftungseinrichtung der Überkopf-Kabinenausstattung der Fig. 1A und Fig. 1B gemäß einer ersten Ausführungsform.

Fig. 3A bis 3C zeigen eine zweite Ausführungsform der Belüftungseinrichtung der erfindungsgemäßen Überkopf-Kabinenausstattung der Fig. 1A und Fig. 1B.

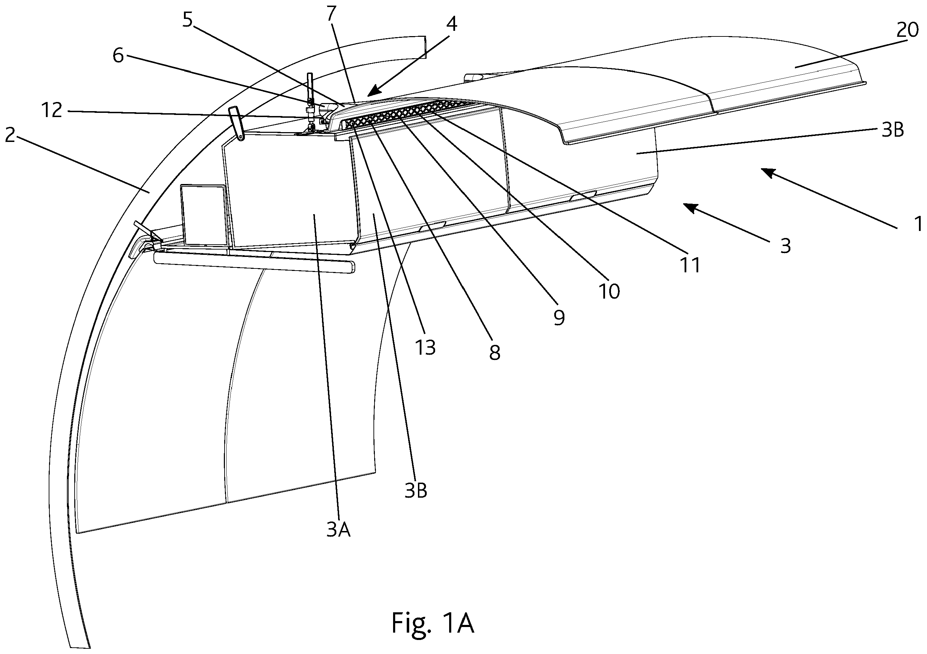

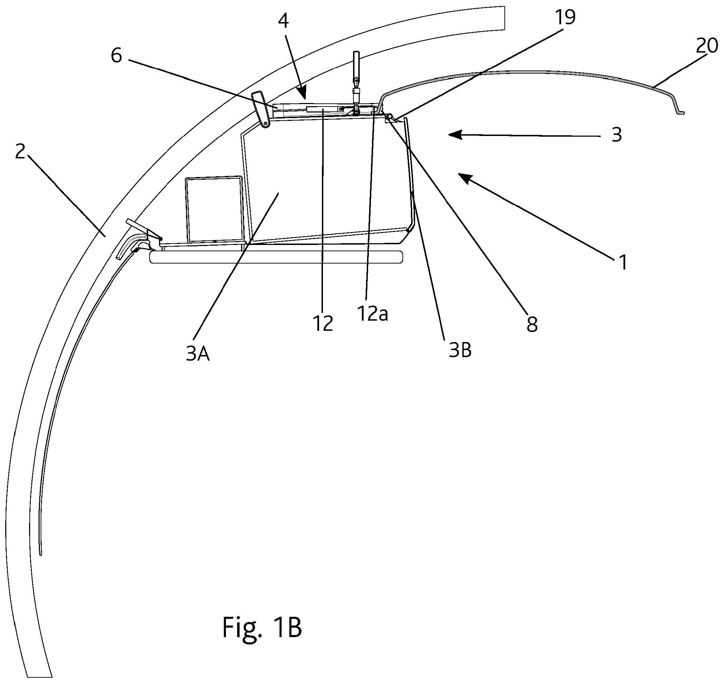

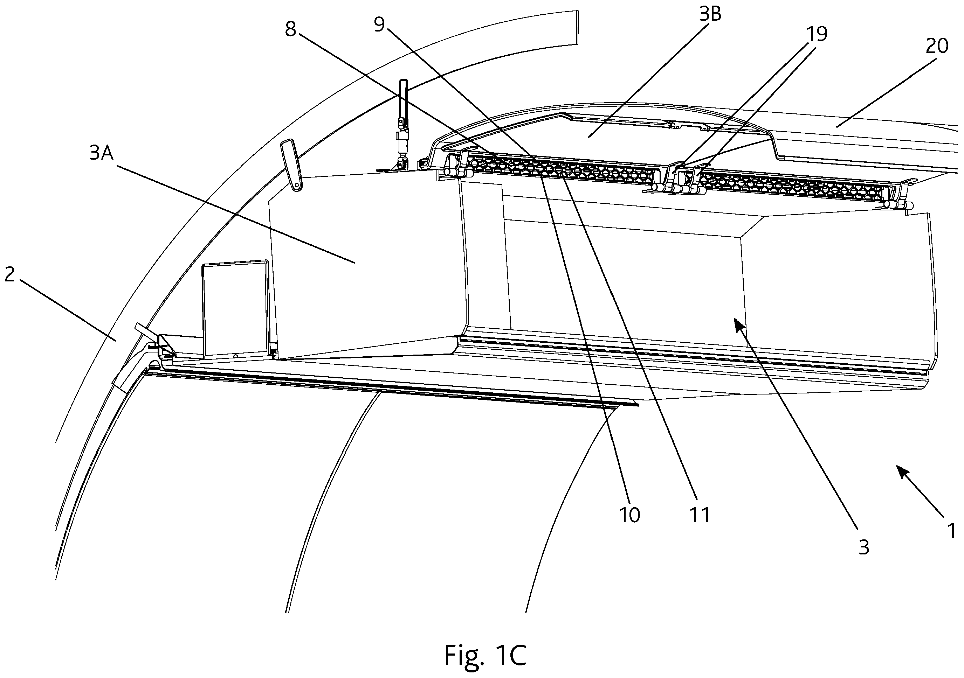

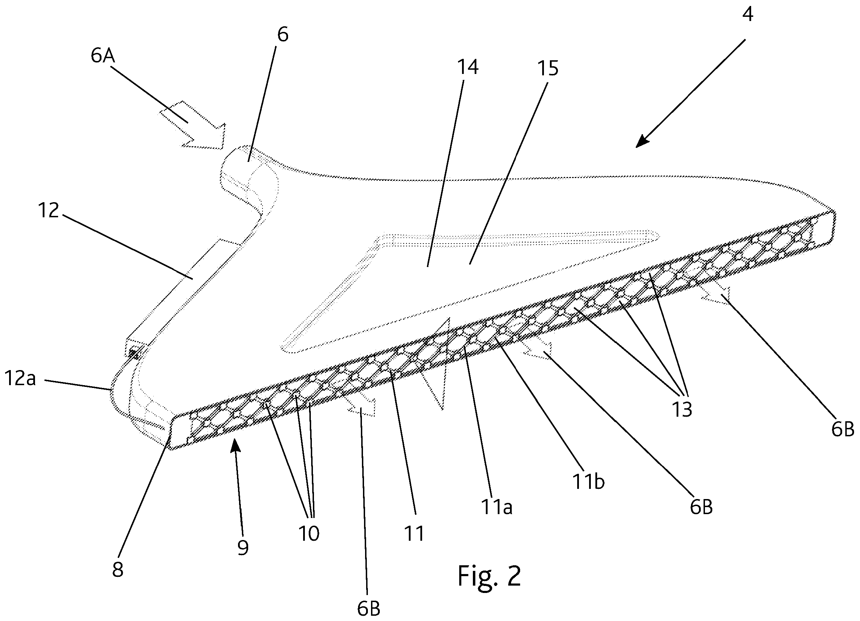

Fig. 1A und 1B zeigen eine Überkopf-Kabinenausstattung 1 für ein Flugzeug, welches durch den Querschnitt eines Flugzeugrumpfes 2 angedeutet wird. Die Überkopf-Kabinenausstattung 1 weist ein Überkopf-Gepäckfach 3 mit einem feststehenden Gepäckfachgehäuse 3A und zumindest einer (hier zwei) von einer Schließ- in eine Offenstellung (vgl. Fig. 1A) hochschwenkbaren Tür bzw. Klappe(n) 3B auf. Diese Ausführung von Gepäckfächern wird auch als "shelf bin" bezeichnet. Eine andere Ausführung des Überkopf-Gepäckfachs (sogenanntes "pivot bin") weist eine Schütte auf, welche von einer Schließ- in eine Offenstellung relativ zu einem Gehäuse absenkbar ist. Die Erfindung wird im Folgenden beispielhaft anhand eines "shelf bin" erläutert. Das Gepäckfachgehäuse 3A schließt einen Aufnahmeraum 3C ein, in welchem Gepäckstücke aufgenommen werden können. Zudem weist die Überkopf-Kabinenausstattung 1 eine Belüftungseinrichtung 4 mit einem Gehäuse 5, einem Lufteinlass 6, einem Luftführungskanal 7 und einem in Längsrichtung der Flugzeugkabine langgestreckten Luftauslass 8 auf. In der gezeigten Ausführung ist der Lufteinlass 6 als Lufteinlassstutzen ausgebildet, welchem Luft in Pfeilrichtung 6A (vgl. Fig. 2) zugeführt wird. Die Belüftungseinrichtung 4 ist auf einem Oberteil des Gepäckfachgehäuses 4 angeordnet. Anschließend strömt die Luft entlang des Luftführungskanals 7 vom Lufteinlass 6 zum Luftauslass 8. Schließlich wird die Luft oberhalb des Überkopf-Gepäckfaches 3 über den Luftauslass 8 in Pfeilrichtung 6B in die Flugzeugkabine abgegeben. Je nach Ausführung können mehrere Überkopf-Kabinenausstattungen 1 in Längsrichtung des Flugzeuges aufeinander folgen. Weiters weist die Überkopf-Kabinenausstattung 1 eine Beleuchtungseinrichtung 9 mit Beleuchtungselementen 10 zur Abgabe von Licht in Richtung eines Deckenbereichs der Flugzeugkabine auf. Die Belüftungseinheit 4 und die Beleuchtungseinrichtung 9 sind über dem Überkopf-Gepäckfach 3 angeordnet.

Erfindungsgemäß erstreckt sich entlang des Luftauslasses 8 an der der Flugzeugkabine zugewandten Vorderseite der Belüftungseinrichtung 4 ein Träger 11, an welchem die Beleuchtungselemente 10 der Beleuchtungseinrichtung 9 angeordnet sind. Die Klappe 3B des Überkopf-Gepäckfaches 3 ist über einen Schwenkarm 19 derart am Gepäckfachgehäuse 3A gelagert, dass in der Offenstellung der Klappe 3B (nicht dargestellt) zwischen der Oberseite des Oberteils des Gepäckfachgehäuses 3A und der (bezogen auf die Schließstellung) oberen Kante der Klappe 3B ein Spalt ausgebildet ist, durch den Licht auch im geöffneten Zustand der Klappe 3B in die Flugzeugkabine abgegeben werden kann. In der gezeigten Ausführung ist zudem ein Deckenpaneel 20 vorgesehen, welches im Bereich des Luftauslasses 8 ausgeschnitten ist, um den Luft- und Lichtaustritt zu ermöglichen.

An der Belüftungseinrichtung 4 kann weiters ein Netzteil 12 zur Stromversorgung der Beleuchtungselemente 10 angeordnet sein (vgl. Fig. 2). Vorzugsweise ist das Netzteil 12 außen am Gehäuse 5 angeordnet. Von dem Netzteil 12 geht eine Leitung 12a zum Träger 11, um die Beleuchtungselemente 10 mit Strom zu versorgen.

Fig. 2 zeigt eine erste Ausführungsform der Belüftungseinrichtung 4, welche beispielsweise in SandwichBauweise gefertigt sein kann. Der Träger 11 lässt an der Vorderseite der Belüftungseinrichtung 4 eine Mehrzahl, insbesondere eine Vielzahl, von Luftauslassöffnungen 13 frei, so dass Luft vorbei an den Beleuchtungselementen 10 durch den Luftauslass 8 ausströmen kann. Der Träger 11 ist auf der vom Lufteinlass 6 abgewandten Vorderseite im Wesentlichen bündig mit einer den Luftauslass 8 begrenzenden Vorderseite des Gehäuses 5 angeordnet. In der gezeigten Ausführung ist als Träger 11 eine Gitterstruktur 11a mit sich kreuzenden Diagonalträgerelementen 11b vorgesehen. Die Beleuchtungselemente 10 sind in der gezeigten Ausführung an den Kreuzungsstellen der Diagonalträgerelemente 11b angeordnet.

Um den durch die Belüftungseinrichtung 4 eingenommenen Raum oberhalb des Überkopfgepäckfaches 3 optimal auszunutzen, weist der Luftauslass 8 eine größere Längs- als Höhenerstreckung auf. Bevorzugt ist der Luftauslass im Wesentlichen rechteckig. Der Träger 11 erstreckt sich im Wesentlichen über die gesamte Länge und Höhe des Luftauslasses 8.

Das Gehäuse 5 der Belüftungseinrichtung 4 weitet sich vom Lufteinlass 6 zum Luftauslass 8 hin, um eine gleichmäßige Verteilung der Luft entlang des Luftauslasses 8 zu ermöglichen. Zur Vergleichmäßigung der Luftströmung entlang des Luftauslasses 8 ist eine Einrichtung 14 vorgesehen. Die Einrichtung 14 kann durch eine Vertiefung 15 des Belüftungsgehäuses 5 gebildet sein, welche sich zum Luftauslass 8 hin verbreitert.

Bei der in Fig. 2 gezeigten Ausführung tritt die Luft durch den Lufteinlass 6 in die Belüftungseinrichtung 4 ein. Über den Luftführungskanal 7 wird die Luft zum Luftauslass 8 transportiert. Der Lufteinlass 6 ist in der gezeigten Ausführung im Wesentlichen mittig bezüglich der Längserstreckung des Luftauslasses 8 angeordnet. Die Einrichtung 14 verteilt den mittig aus dem Lufteinlass 6 in den Luftführungskanal 7 eintretenden Luftstrom im Wesentlichen gleichmäßig über den Querschnitt des Luftführungskanals 7. Die Vertiefung 15 hat die Grundform der Belüftungseinrichtung 4. Die Vertiefung 15 verbreitet sich zum Luftauslass 8 hin vorzugsweise im Verhältnis von Luftauslass 8 zu Lufteinlass 6. Vorteilhafterweise kann die Vertiefung 15 schon während der Fertigung des Gehäuses 5 der Belüftungseinheit 4 hergestellt werden. Die Kanten der Vertiefung 15 sind bevorzugt abgerundet ausgeführt, um einen guten Luftströmungsverlauf zu ermöglichen und störende Töne durch ein Auftreffen des Luftstroms auf eine spitze Kante zu verhindern. Weiters bildet die Vertiefung 15 eine Querschnittverjüngung, welche eine gleichmäßige Aussparung am Luftauslass gewährleistet.

Der Luftstrom kann durch die Luftauslassöffnungen 13 der Gitterstruktur 11a gleichmäßig aus dem Luftauslass 8 austreten. Beim Austreten aus dem Luftauslass 8 strömt die Luft an den Beleuchtungselementen 10 der Beleuchtungseinrichtung 9 vorbei. Durch die Anordnung der Beleuchtungselemente 10 an den Kreuzungspunkten der Diagonalträgerelemente 11b der Gitterstruktur 11a werden die Beleuchtungselemente 10, in der gezeigten Ausführung LED-Spots, insbesondere WRGB-LED-Spots 10a, von allen Seiten umströmt, so dass die Wärme der Beleuchtungselemente 10 abgeführt wird. Die Beleuchtungselemente 10 werden durch nicht dargestellte Leiterbahnen entlang der Gitterstruktur 11a mit Strom versorgt. Gängige Verkehrsflugzeuge werden mit einem Wechselstromnetz betrieben. In diesem Fall wandelt das Netzteil 12 den bereitgestellten Wechselstrom in Gleichstrom um und führt diesen über eine Leitung 12a den nicht dargestellten Leiterbahnen der Gitterstruktur 11a zu.

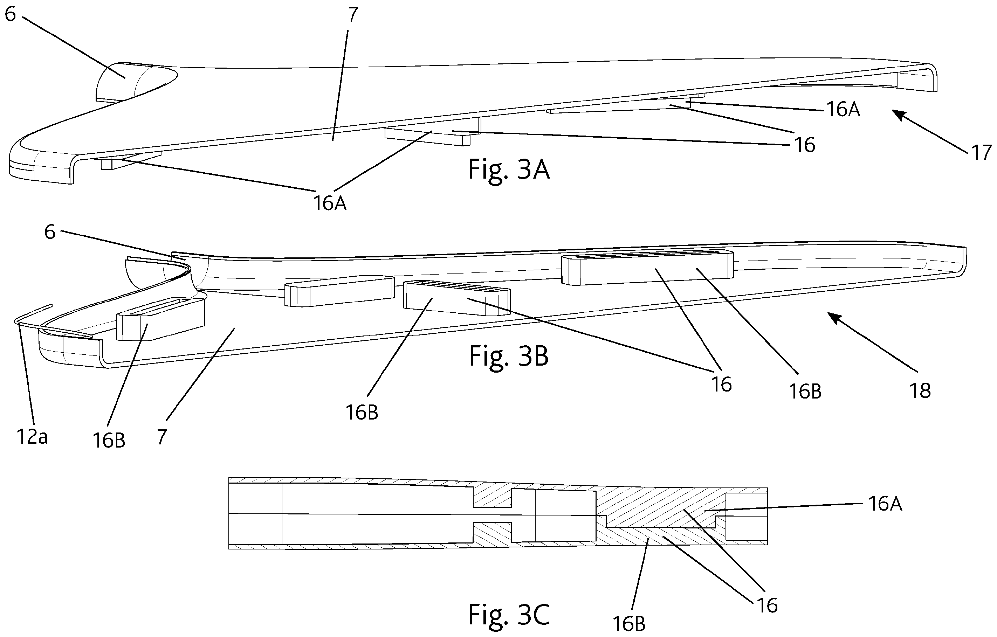

Fig. 3A bis 3C zeigen eine Ausführungsform der Belüftungseinrichtung 4, welche beispielsweise in Halbschalenbauweise gefertigt sein kann. Fig 3A zeigt eine obere Halbschale 17 des Gehäuses 5 der Belüftungseinrichtung 4. Fig. 3B zeigt eine untere Halbschale 18 des Gehäuses 5 und Fig. 3C zeigt eine Schnittansicht der zusammengefügten Halbschalen 17 und 18 aus Fig 3A und Fig 3B. Die Halbschalen weisen Luftführungsrippen 16 innerhalb des Luftkanals 7 auf, welche bei dieser Ausführungsform als Einrichtung 14 zur Vergleichmäßigung der Luftströmung entlang des Luftauslasses 8 fungieren. In der gezeigten Ausführung sind beispielsweise vier Luftführungsrippen 16 vorgesehen. In der gezeigten Ausführung sind die Luftführungsrippen 16 jeweils aus einem oberen Halbteil 16A und einem unteren Halbteil 16B zusammengesetzt. Beim Verbinden der oberen 17 mit der unteren Halbschale 18 werden die oberen 16A mit den unteren Halbteilen 16B verbunden, insbesondere verklebt, um die Luftführungsrippen 16 zu erhalten. Weiters können Steckverbindungen insbesondere als Positionierhilfen für das Zusammenfügen an den oberen 16A und den unteren Halbteilen 16B der Luftführungsrippen 16 ausgebildet sein. Weiters ist in Figur 3B schematisch die Leitung 12a zu dem (hier nicht dargestellten) Netzteil 12 dargestellt. Die Luftführungsrippen 16 der Einrichtung 14 dienen der Vergleichmäßigung des Luftstromes. Mittels der Luftführungsrippen 16 kann die Luft entlang des Luftführungskanals 7 so gelenkt werden, dass die Luft im Wesentlichen gleichmäßig entlang des Luftauslasses 8 austritt.

### Bezugsziffernliste:

1 Überkopf-Kabinenausstattung
2 Flugzeugrumpf
3 Überkopfgepäckfach
3A Gepäckfachgehäuse
3B Klappe
4 Belüftungseinrichtung
5 Gehäuse
6 Lufteinlass
6A Pfeilrichtung
6B Pfeilrichtung
7 Luftführungskanal
8 Luftauslass
9 Beleuchtungseinrichtung
10 Beleuchtungselemente
10a WRGB-LED-Spots
11 Träger
11a Gitterstruktur
11b Diagonalträgerelemente
12 Netzteil
12a Leitung
13 Luftauslassöffnungen
14 Einrichtung
15 Vertiefung
16 Luftführungsrippe
16a obere Halbteil
16B untere Halbteil
17 obere Halbschale
18 untere Halbschale
19 Schwenkarm
20 Deckenpaneel

## Patentansprüche

1. Überkopf-Kabinenausstattung (1) für ein Flugzeug, aufweisend:
ein Überkopf-Gepäckfach (3) für ein Gepäckstück,
eine Belüftungseinrichtung (4) mit einem Gehäuse (5), einem Lufteinlass (6), einem Luftführungskanal (7) und einem Luftauslass (8),
eine Beleuchtungseinrichtung (9) mit Beleuchtungselementen (10), wobei die Belüftungseinrichtung (4) und die Beleuchtungseinrichtung (9) jeweils oberhalb des Überkopf-Gepäckfachs (3) angeordnet sind,
**dadurch gekennzeichnet, dass**
am Luftauslass (8) der Belüftungseinrichtung (4) ein Träger (11) vorgesehen ist, an welchem die Beleuchtungselemente (10) angeordnet sind.

2. Überkopf-Kabinenausstattung (1) nach Anspruch 1, **dadurch gekennzeichnet, dass** der Träger (11) eine Mehrzahl, insbesondere eine Vielzahl, von Luftauslassöffnungen (13) des Luftauslasses (8) freilässt, durch die die Luft vorbei an den Beleuchtungselementen (10) aus dem Luftauslass (8) ausströmen kann.

3. Überkopf-Kabinenausstattung (1) nach Anspruch 2, **dadurch gekennzeichnet, dass** der Träger (11) auf der vom Lufteinlass (6) abgewandten Seite im Wesentlichen bündig mit einer den Luftauslass (8) begrenzenden Vorderseite des Gehäuses (5) angeordnet ist.

4. Überkopf-Kabinenausstattung (1) nach Anspruch 3, **dadurch gekennzeichnet, dass** als Träger (11) eine Gitterstruktur (11a), insbesondere mit Längs- und/oder Querträger- und/oder Diagonalträgerelementen (11b) vorgesehen ist.

5. Überkopf-Kabinenausstattung (1) nach Anspruch 4, **dadurch gekennzeichnet, dass** die Beleuchtungselemente (10) an Kreuzungsstellen der Längs- und/oder Querträger- und/oder Diagonalträgerelemente (11b) angeordnet sind.

6. Überkopf-Kabinenausstattung (1) nach Anspruch 4 und 5, **dadurch gekennzeichnet, dass** der Luftauslass (8) eine um ein Mehrfaches größere Längs- als Höhenerstreckung aufweist, wobei der Träger (11), insbesondere die Gitterstruktur, in Richtung der Längserstreckung des Luftauslasses (8) langgestreckt ist.

7. Überkopf-Kabinenausstattung (1) nach einem der Ansprüche 4 bis 6, **dadurch gekennzeichnet, dass** sich der Träger (11) im Wesentlichen über die gesamte Längserstreckung des Luftauslasses (8) erstreckt.

8. Überkopf-Kabinenausstattung (1) nach einem der Ansprüche 1 bis 7, **dadurch gekennzeichnet, dass** sich das Gehäuse (5) der Belüftungseinrichtung (4) vom Lufteinlass (6) zum Luftauslass (8) hin erweitert.

9. Überkopf-Kabinenausstattung (1) nach einem der Ansprüche 1 bis 8, **dadurch gekennzeichnet, dass** eine Einrichtung (14) zur Vergleichmäßigung der Luftströmung entlang des Luftauslasses (8) vorgesehen ist.

10. Überkopf-Kabinenausstattung (1) nach Anspruch 9, **dadurch gekennzeichnet, dass** die Einrichtung (14) zur Vergleichmäßigung der Luftströmung entlang des Luftauslasses (8) eine Vertiefung (15) des Belüftungsgehäuses (5) in einem mittleren Längsabschnitt gegenüber einem vorderen und einem hinteren Längsabschnitt aufweist.

11. Überkopf-Kabinenausstattung (1) nach Anspruch 10, **dadurch gekennzeichnet, dass** sich die Vertiefung (15) zum Luftauslass (8) hin verbreitert.

12. Überkopf-Kabinenausstattung (1) nach Anspruch 9, **dadurch gekennzeichnet, dass** die Einrichtung (14) zumindest eine Luftführungsrippe (16) innerhalb des Luftführungskanals (7) aufweist.

13. Flugzeug mit zumindest einer Überkopf-Kabinenausstattung (1) nach einem der Ansprüche 1 bis 12.

## Claims

1. Overhead cabin equipment (1) for an aircraft, comprising:
an overhead luggage compartment (3) for a piece of luggage,
a ventilation device (4) with a housing (5), an air inlet (6), an air duct (7) and an air outlet (8),
a lighting device (9) with lighting elements (10), wherein the ventilation device (4) and the lighting device (9) are each arranged above the overhead luggage compartment (3),
**characterized in that**
a support (11) is provided at the air outlet (8) of the ventilation device (4), on which the lighting elements (10) are arranged.

2. Overhead cabin equipment (1) according to claim 1, **characterized in that** the support (11) leaves a plurality, in particular a multitude, of air outlet openings (13) of the air outlet (8) free, through which the air can flow out of the air outlet (8) past the lighting elements (10).

3. Overhead cabin equipment (1) according to claim 2, **characterized in that** the support (11) is arranged on the side facing away from the air inlet (6) essentially flush with a front side of the housing (5) delimiting the air outlet (8).

4. Overhead cabin equipment (1) according to claim 3, **characterized in that** a grid structure (11a), in particular with longitudinal and/or transverse and/or diagonal support elements (11b), is provided as the support (11).

5. Overhead cabin equipment (1) according to claim 4, **characterized in that** the lighting elements (10) are arranged at crossing points of the longitudinal and/or transverse and/or diagonal support elements (11b).

6. Overhead cabin equipment (1) according to claims 4 and 5, **characterized in that** the air outlet (8) comprises a longitudinal extension which is several times greater than the vertical extension, the support (11), in particular the grid structure, being elongated in the direction of the longitudinal extension of the air outlet (8).

7. Overhead cabin equipment (1) according to one of claims 4 to 6, **characterized in that** the support (11) extends essentially over the entire longitudinal extension of the air outlet (8).

8. Overhead cabin equipment (1) according to one of claims 1 to 7, **characterized in that** the housing (5) of the ventilation device (4) expands from the air inlet (6) to the air outlet (8).

9. Overhead cabin equipment (1) according to one of claims 1 to 8, **characterized in that** a setup (14) for homogenizing the air flow along the air outlet (8) is provided.

10. Overhead cabin equipment (1) according to claim 9, **characterized in that** the setup (14) for homogenizing the air flow along the air outlet (8) comprises a recess (15) of the ventilation housing (5) in a central longitudinal section opposite a front and a rear longitudinal section.

11. Overhead cabin equipment (1) according to claim 10, **characterized in that** the recess (15) widens towards the air outlet (8).

12. Overhead cabin equipment (1) according to claim 9, **characterized in that** the setup (14) comprises at least one air guiding rib (16) within the air duct (7).

13. Aircraft with at least one overhead cabin equipment (1) according to any one of claims 1 to 12.

## Revendications

1. Équipement de cabine en hauteur (1) pour un aéronef, comprenant :
un compartiment de rangement en hauteur (3) pour un bagage,
un dispositif de ventilation (4) comprenant un boîtier (5), une entrée d'air (6), un canal d'air (7) et une sortie d'air (8),
un dispositif d'éclairage (9) comportant des éléments d'éclairage (10),
le dispositif de ventilation (4) et le dispositif d'éclairage (9) étant respectivement disposés au-dessus du compartiment de rangement en hauteur (3),
**caractérisé en ce que**
une structure portante (11) est prévue au niveau de la sortie d'air (8) du dispositif de ventilation (4), sur laquelle sont disposés les éléments d'éclairage (10).

2. Équipement de cabine en hauteur (1) selon la revendication 1, **caractérisé en ce que** la structure portante (11) découvre une pluralité, en particulier une multiplicité, d'ouvertures (13) de la sortie d'air (8), par lesquelles l'air peut s'écouler autour des éléments d'éclairage (10) depuis la sortie d'air (8).

3. Équipement de cabine en hauteur (1) selon la revendication 2, **caractérisé en ce que** la structure portante (11) est disposée, sur la face avant du boîtier (5) délimitant la sortie d'air (8), de manière essentiellement coïncidente avec cette face, sur la face opposée à l'entrée d'air (6).

4. Équipement de cabine en hauteur (1) selon la revendication 3, **caractérisé en ce qu'**une structure en treillis (11a), en particulier comprenant des éléments porteurs longitudinaux et/ou transversaux et/ou diagonaux (11b), est prévue comme structure portante (11).

5. Équipement de cabine en hauteur (1) selon la revendication 4, **caractérisé en ce que** les éléments d'éclairage (10) sont disposés aux points d'intersection des éléments de structure longitudinaux et/ou transversaux et/ou diagonaux (11b) de la structure en treillis.

6. Équipement de cabine en hauteur (1) selon les revendications 4 et 5, **caractérisé en ce que** la sortie d'air (8) présente une dimension longitudinale largement plus grande que sa dimension verticale, la structure portante (11), en particulier la structure en treillis, étant allongée dans la direction de la longueur de la sortie d'air (8).

7. Équipement de cabine en hauteur (1) selon l'une quelconque des revendications 4 à 6, **caractérisé en ce que** la structure portante (11) s'étend essentiellement sur toute la dimension longitudinale de la sortie d'air (8).

8. Équipement de cabine en hauteur (1) selon l'une quelconque des revendications 1 à 7, **caractérisé en ce que** le boîtier (5) du dispositif de ventilation (4) s'élargit de l'entrée d'air (6) vers la sortie d'air (8).

9. Équipement de cabine en hauteur (1) selon l'une quelconque des revendications 1 à 8, **caractérisé en ce qu'**un dispositif (14) d'équilibrage du flux d'air le long de la sortie d'air (8) est prévu.

10. Équipement de cabine en hauteur (1) selon la revendication 9, **caractérisé en ce que** le dispositif (14) d'homogénéisation de l'écoulement d'air le long de la sortie d'air (8) comporte une dépression (15) du boîtier de ventilation (5) dans une section longitudinale centrale, par rapport à des sections longitudinales avant et arrière.

11. Équipement de cabine en hauteur (1) selon la revendication 10, **caractérisé en ce que** la dépression (15) s'élargit vers la sortie d'air (8).

12. Équipement de cabine en hauteur (1) selon la revendication 9, **caractérisé en ce que** le dispositif (14) comporte au moins une ailette de direction (16) à l'intérieur du canal d'air (7).

13. Aéronef comprenant au moins un équipement de cabine en hauteur (1) selon l'une quelconque des revendications 1 à 12.
